(19) Europäisches Patentamt
European Patent Office
Office européen des brevets

(11) **EP 1 047 990 B1**

(12) **EUROPÄISCHE PATENTSCHRIFT**

(45) Veröffentlichungstag und Bekanntmachung des Hinweises auf die Patenterteilung:
**10.10.2001 Patentblatt 2001/41**

(21) Anmeldenummer: **98963317.7**

(22) Anmeldetag: **04.11.1998**

(51) Int Cl.⁷: **G06F 9/46**

(86) Internationale Anmeldenummer:
**PCT/DE98/03215**

(87) Internationale Veröffentlichungsnummer:
**WO 99/38072 (29.07.1999 Gazette 1999/30)**

(54) **VORRICHTUNG UND VERFAHREN ZUR STEUERUNG VON PROZESSEN AUF EINEM COMPUTERSYSTEM**

METHOD AND DEVICE FOR CONTROLLING PROCESSES IN A COMPUTER SYSTEM

DISPOSITIF ET PROCEDE DE COMMANDE DE PROCESSUS DANS UN SYSTEME INFORMATIQUE

(84) Benannte Vertragsstaaten:
**BE CH DE ES FR GB IT LI NL**

(30) Priorität: **22.01.1998 DE 19802364**

(43) Veröffentlichungstag der Anmeldung:
**02.11.2000 Patentblatt 2000/44**

(73) Patentinhaber: **SIEMENS AKTIENGESELLSCHAFT**
**80333 München (DE)**

(72) Erfinder:
• **BAUER, Stefan**
**D-82299 Türkenfeld (DE)**
• **HAAS, Ulrich**
**D-82256 Fürstenfeldbruck (DE)**
• **NIESSNER, Egon**
**D-86415 Mering (DE)**
• **SIMSCH, Birgit**
**D-81477 München (DE)**

(56) Entgegenhaltungen:
**EP-A- 0 549 208        EP-A- 0 794 490**
**EP-A- 0 817 041**

## Beschreibung

Die vorliegende Erfindung betrifft ein Computersystem und ein Verfahren zur Steuerung von Prozessen auf einem Computersystem, welches zur parallelen Ausführung von mehreren Prozessen ausgebildet ist.

Bei einem solchen Computersystem tritt häufig das Problem einer Blockierung einer knappen Ressource auf, wenn die mehreren auf die Ressource zugreifenden Prozesse deren Kapazität erschöpfen. Solche Blockierungen führen zu einem instabilen Systemzustand und können häufig unerwünschte Wiederanlauf-Maßnahmen erforderlich machen.

Zur Lösung dieses Problems ist möglich, die knappe Ressource zu vergrößern. Dasselbe Problem taucht dann jedoch bei einer anderen Ressource des Computersystems auf, die dann knapp ist. Es ist außerdem bekannt, alle auf die Ressource zugreifenden Prozesse konstant zu verzögern. Dies führt jedoch insgesamt zu einer Verzögerung der Prozeßverarbeitung und kann eine Blockierung der knappen Ressource auch nur bis zu einer bestimmten erhöhten Maximalauslastung verhindern.

Desweiteren ist aus der Europäischen Patentschrift EP-A-0-794 490 ein Multitasking-System bzw. die Kommunikation in einem Computernetz gemäß dem 'Client/server model' bekannt, bei dem mehrere Clients auf einen Server zugreifen können. Hierbei wird über die Anzahl der vom Client vorgegebenen "threads" der Zugang zum Server gesteuert. Bei Überschreiten einer bestimmten Anzahl wird keine Verbindung aufgebaut oder der Client muß warten, bis ein "thread" erlaubt ist.

Es ist daher Aufgabe der Erfindung, ein derartiges Computersystem und ein Verfahren zur Steuerung von Prozessen auf dem Computersystem vorzuschlagen, bei dem eine Blockierung der knappen Ressource vermieden werden kann.

Gelöst wird die Aufgabe durch ein Computersystem mit einer ersten Einrichtung zur Berechnung der Kapazitätsauslastung C der Ressource, einer zweiten Einrichtung zur Bestimmung einer Last-Verantwortlichkeit eines auf die Ressource zugreifenden Prozesses und einer dritten Einrichtung zur Verzögerung der Ausführung des auf die Ressource zugreifenden Prozesses in Abhängigkeit von der Kapazitätsauslastung C, der kritischen Kapazitätsauslastung $C_{crit}$ der Ressource und der Last-Verantwortlichkeit LR des Prozesses.

Die Erfindung schlägt weiterhin das in Anspruch 11 definierte Verfahren zur Steuerung von Prozessen auf einem Computersystem vor.

Die erfindungsgemäße Vorrichtung und das erfindungsgemäße Verfahren arbeiten adaptiv, d. h. abhängig vom aktuellen Nutzungsgrad der Ressource und der Last-Verantwortlichkeit eines Prozesses, so daß andere Prozesse, die die Ressource nur wenig beanspruchen, unbeeinflußt weiterlaufen können. So kann trotz hoher Auslastung der Ressource sichergestellt werden, daß für die Stabilität des System notwendige Prozesse weiterlaufen. Durch die spezifische Verzögerung jedes individuellen Prozesses in Abhängigkeit von der aktuellen Kapazitätsauslastung, der kritischen Kapazitätsauslastung und der Last-verantwortlichkeit des jeweiligen Prozesses können vom Benutzer des Computersystems gewünschte Randbedingungen implementiert werden. Beispielsweise ist es möglich, wie oben erwähnt, einzelne Prozesse mit hoher Priorität trotz überkritischer Auslastung nicht oder nur wenig zu verzögern. Die Verzögerung eines Prozesses kann mit der jeweiligen Last-Verantwortlich-keit des Prozesses zunehmen. Prozesse, deren Last-Verantwortlichkeit unterhalb eines Grenzwertes liegen, können von der Verzögerung völlig unbeeinflußt bleiben. Wenn die Last der knappen Ressource unterhalb einer kritischen Auslastung liegt, können alle Prozesse ohne Verzögerung abgearbeitet werden.

Die Ansprüche 2 bis 10 beschreiben vorteilhafte Weiterbildungen des erfindungsgemäßen Computersystems und die Ansprüche 12 bis 20 solche des erfindungsgemäßen Verfahrens.

Die Last-Verantwortlichkeit LR kann definiert werden als die Anzahl der bei der Ausführung eines Prozesses erforderlichen Zugriffe auf die knappe Ressource oder durch die von dem Prozeß beanspruchte Kapazität der Ressource oder durch eine Kombination beider.

Die kritische Kapazitätsauslastung $C_{crit}$ der Ressource kann je nach Typ, Aufgabe und Stabilität der Ressource gewählt werden. Vorteilhaft liegt die kritische Kapazitätsauslastung $C_{crit}$ zwischen 20% und 80% der maximalen Kapazität $C_{max}$, insbesondere bei ungefähr 50% der maximalen Kapazität.

Vorzugsweise wird ein Prozess nicht verzögert, dessen Last-Verantwortlichkeit LR unterhalb eines festgelegten Wertes liegt. Dadurch können Prozesse unverzögert weiterlaufen, die nicht oder nur wenig zu der kritischen Last der Ressource beitragen.

Liegt die tatsächliche aktuelle Kapazitätsauslastung C der Ressource unterhalb der kritischen Kapazitätsauslastung $C_{crit}$, werden alle Prozesse unverzögert ausgeführt. So kann das Computersystem mit maximaler Geschwindigkeit arbeiten, wenn keine kritische Last vorliegt.

Die Verzögerung kann zwischen einer minimalen und einer maximalen Verzögerungszeit variiert werden, wobei Minimal- und Maximalwert entsprechend den Eigenschaften und Anforderungen an die Ressource gewählt werden können.

Ein Ausführungsbeispiel der Erfindung wird im folgenden anhand der Zeichnung beschrieben, in der

Fig. 1 eine schematische Darstellung eines erfindungsgemäßen Computersystems und

Fig. 2 ein Diagramm zur Erläuterung der Funktionsweise der Erfindung ist.

Im folgenden werden wesentliche Begriffe, die zur Beschreibung der Erfindung benötigt werden, definiert:

Computersystem:

Mit Computersystem ist jedes Gerät zur elektronischen Datenverarbeitung gemeint, unabhängig davon, ob es sich um einen Vielzweck-Computer zur Ausführung von Anwendungsprogrammen oder um einen für eine Aufgabe maßgeschneiderten Computer handelt. Insbesondere sind auch Computersysteme zur Steuerung von Kommunikationsnetzwerken darunter zu verstehen.

Ressource:

Unter Ressource oder Betriebsmittel sind die zur Erledigung eines Auftrages, z. b. einer Informationsübermittlung einsetzbaren Komponenten (Hardware und Software) des Computersystems zu verstehen, etwa Speicher, Schnittstellen, Datenleitungen.

Prozess:

Ein Prozess ist ein Satz von auf eine Ressource des Computersystems zugreifenden Instruktionen.

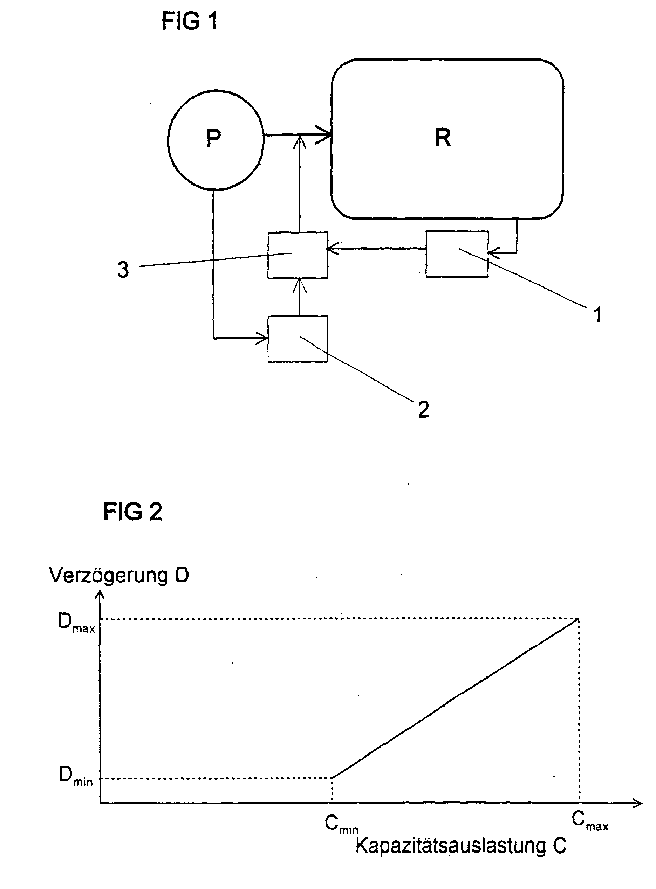

Laufen bei dem erfindungsgemäßen Computersystem mehrere Prozesse P parallel ab, kann es zu einer hohen Belastung durch Zugriffe auf eine knappe Ressource R des Computersystems kommen. Eine erste Einrichtung 1 mißt die Kapazitätsauslastung C dieser Ressource R, etwa eines Speichers, wobei beispielsweise die Belegung der Speicherkapazität als Maß für die Auslastung dienen kann. Eine zweite Einrichtung 2 bestimmt für jeden auf die knappe Ressource R zugreifenden Prozess, in Fig. 1 schematisch als P dargestellt, eine Last-Verantwortlichkeit LR, welche ein Maß für die Verantwortlichkeit des Prozesses für die Kapazitätsauslastung C der knappen Ressource R ist. Eine dritte Einrichtung 3 verzögert dann die Ausführung des auf die Ressource zugreifenden Prozesses P um eine Zeitdauer in Abhängigkeit von der aktuellen Kapazitätsauslastung C, der kritischen Kapazitätsauslastung $C_{crit}$ der Ressource R und der Last-Verantwort-lichkeit LR des Prozesses. Hat ein Prozess eine geringe Last-Verantwortlichkeit, so wird dieser nicht verzögert. Die dritte Einrichtung erzeugt erst dann eine Verzögerung von Prozessen, wenn die tatsächliche Kapazitätsauslastung C oberhalb der kritischen Kapazitätsauslastung $C_{crit}$ liegt. Je nach momentaner Kapazitätsauslastung und Last-Verantwortlichkeit eines Prozesses kann dieser um eine Zeitdauer zwischen einer minimalen Verzögerung $D_{min}$ und einer maximalen Verzögerung $D_{max}$ verzögert werden.

Fig. 2 zeigt schematisch die von der dritten Einrichtung erzeugte Verzögerung eines Prozesses P mit einer Last-Verantwortlichkeit LR = 0 in Abhängigkeit von der aktuellen Kapazität C der Ressource R. Unterhalb der kritischen Kapazität $C_{crit}$ wird der Prozess nicht verzögert, bei Erreichen dieser kritischen Kapazität tritt eine Verzögerung von $D_{min}$ ein, die bei zunehmender Kapazitätsauslastung bis auf den Maximalwert $D_{max}$ zunimmt.

Durch die Verzögerung bestimmter, auf die knappe Ressource zugreifender Prozesse unter Last, die besonders zur Auslastung der Ressource beitragen, können die Kapazitätsengpässe beseitigt werden und eine Blockierung der Ressource und damit des gesamten Computersystems vermieden werden (ähnlich wie eine Geschwindigkeitsbeschränkung auf einer Autobahn zur Verringerung der Stauwahrscheinlichkeit führen kann). Die Stabilität des Systems wird dadurch verbessert, und einzelne Prozesse, die nicht oder nicht wesentlich zur Kapazitätsauslastung des Computersystems beitragen, können unverzögert oder nur unwesentlich verzögert weiterarbeiten.

Im folgenden wird ein Versuchsbeispiel der Erfindung unter Bezugnahme auf den Anhang erläutert.

Die Verzögerung eines auf die knappe Ressource R, im Versuchsfall eines Speichers mit einer Kapazität von 64 kByte, zugreifenden Prozesses war durch die folgende Formel gegeben:

$$D = \min\left( D_{max}, K \times LR + D_{min} + \frac{(C - C_{crit}) \times (D_{max} - D_{min})}{C_{max} - C_{crit}} \right)$$

wobei die maximale Verzögerung $D_{max}$=15s, die minimale Verzögerung $D_{min}$=0,5s und die Konstante K=0,1s war.

Es wurden weiterhin folgende Werte gewählt:

$$C_{crit} = 50\% \; C_{max}, \; (\text{hier: } C_{crit} = 32 \text{ kByte})$$

Dmin=0,5s
$D_{max}$=15s
K=0,1s.

Das erfindungsgemäße Computersystem wurde unter den angegebenen Einstellungen mehrere Wochen lang getestet. Es traten keine Blockierungen des Systems aufgrund eines Überlaufs des Speichers, d.h. der knappen Ressource R, auf. In dem als Anhang beigefügten Computerausdruck bedeutet Process den Namen eines auf die Ressource zugreifenden Prozesses, Time den Zeitpunkt, zu dem der Prozess die Ressource belegt, Count die Last-Verantwortlichkeit eines Prozesses, wenn C größer als $C_{crit}$ ist, im vorliegenden Fall die Anzahl der Schreibvorgänge des Prozesses, Size die Kapazitätsauslastung (Belegung) C des Speichers, wobei $C_{crit}$ gleich 32 KByte ist, und Delay die durch die dritte Einrichtung des Computersystems hervorgerufene Verzögerung des Prozesses.

Steigt die Kapazitätsauslastung über die kritische Kapazitätsauslastung an, wie z. B. zum Zeitpunkt 06:46: 12,47, so tritt eine Verzögerung eines Prozesses ein, die um so größer ist, je stärker der Prozess zur Auslastung der knappen Ressource beiträgt. Fällt die Kapazitätsauslastung wieder unter die kritische Grenze, wie z. B. zum Zeitpunkt 06:47:23,21, nimmt die Verzögerung der Prozesse exponentiell mit der Zeit ab.

Während des gesamten Systemlaufes ist kein Überlaufen des Speichers und damit keine Blockierung des Computersystems aufgetreten.

Anhang 1-3

| Process | Time | Count | Size | Delay |
|---|---|---|---|---|
| nmcmd00c | 06:45:54,54 | 2 | 25168 | 0 |
| nmcmd00c | 06:45:55,93 | 1 | 21691 | 0 |
| nmcmd00c | 06:45:57,61 | 0 | 23153 | 0 |
| nmcmd00c | 06:45:59,33 | 0 | 24615 | 0 |
| nmcmd00c | 06:46:00,71 | 0 | 26077 | 0 |
| nmcmd00c | 06:46:02,26 | 0 | 24099 | 0 |
| nmcmd00c | 06:46:03,64 | 0 | 20581 | 0 |
| nmcmd00c | 06:46:05,04 | 0 | 18409 | 0 |
| nmcmd00c | 06:46:06,43 | 0 | 18720 | 0 |
| nmcmd00c | 06:46:06,81 | 0 | 20182 | 0 |
| nmcmd00c | 06:46:07,21 | 0 | 21671 | 0 |
| nmcmd00c | 06:46:07,66 | 0 | 22979 | 0 |
| nmcmd00c | 06:46:08,26 | 0 | 24468 | 0 |
| nmcmd00c | 06:46:08,80 | 0 | 25086 | 0 |
| nmcmd00c | 06:46:09,25 | 0 | 26575 | 0 |
| nmcmd00c | 06:46:09,78 | 0 | 28064 | 0 |
| nmcmd00c | 06:46:10,21 | 0 | 29553 | 0 |
| nmcmd00c | 06:46:10,79 | 0 | 31042 | 0 |
| nmcmd00c | 06:46:11,15 | 0 | 32531 | 0 |
| scstambc | 06:46:12,47 | 1 | 33471 | 679 |
| scstambc | 06:46:13,00 | 1 | 34211 | 1131 |
| scstambc | 06:46:13,45 | 2 | 35011 | 1869 |
| scstambc | 06:46:14,18 | 1 | 35797 | 2099 |
| scstambc | 06:46:14,56 | 2 | 36777 | 2947 |
| scstambc | 06:46:15,19 | 1 | 37743 | 3286 |
| scstambc | 06:46:15,49 | 3 | 38499 | 4248 |
| scstambc | 06:46:16,18 | 1 | 35892 | 2157 |
| scstambc | 06:46:16,69 | 2 | 35458 | 2142 |
| scstambc | 06:46:17,90 | 1 | 32897 | 329 |
| scstambc | 06:46:18,36 | 1 | 32520 | 0 |
| scstambc | 06:46:19,58 | 2 | 34343 | 1461 |
| scstambc | 06:46:19,70 | 2 | 34860 | 1777 |
| scstambc | 06:46:20,67 | 4 | 36020 | 2985 |
| scstambc | 06:46:21,06 | 3 | 36810 | 3217 |
| scstambc | 06:46:21,17 | 3 | 37005 | 3336 |
| scstambc | 06:46:21,60 | 2 | 37606 | 3453 |
| scstambc | 06:46:22,35 | 2 | 38581 | 4048 |
| scstambc | 06:46:23,88 | 5 | 40631 | 6049 |
| swcmd00c | 06:46:24,33 | 3 | 40844 | 5679 |
| scstambc | 06:46:24,59 | 4 | 41072 | 6068 |
| scstambc | 06:46:24,67 | 4 | 41072 | 6068 |
| scstambc | 06:46:25,18 | 3 | 41384 | 6009 |
| scstambc | 06:46:26,51 | 3 | 40316 | 5357 |
| scstambc | 06:46:30,15 | 6 | 39337 | 5509 |
| scstambc | 06:46:30,82 | 5 | 40321 | 5860 |
| scstambc | 06:46:30,94 | 5 | 40534 | 5990 |
| nmcmd00c | 06:46:31,20 | 1 | 40534 | 4990 |
| scstambc | 06:46:31,31 | 4 | 40835 | 5924 |
| scstambc | 06:46:32,20 | 4 | 41048 | 6054 |
| cdfrop0c | 06:46:34,30 | 1 | 40867 | 5193 |
| scstambc | 06:46:36,69 | 6 | 40855 | 6436 |
| nmcmd00c | 06:46:37,36 | 2 | 41613 | 5898 |
| nmcmd00c | 06:46:44,23 | 3 | 41490 | 6073 |
| nmcmd00c | 06:46:51,23 | 4 | 39298 | 4985 |
| nmcmd00c | 06:46:58,10 | 5 | 36167 | 3324 |
| nmcmd00c | 06:47:02,75 | 6 | 36745 | 3927 |
| nmcmd00c | 06:47:07,58 | 7 | 36213 | 3852 |
| nmcmd00c | 06:47:12,62 | 8 | 35879 | 3899 |
| nmcmd00c | 06:47:17,74 | 9 | 35347 | 3824 |
| nmcmd00c | 06:47:23,21 | 7 | 26626 | 0 |
| nmcmd00c | 06:47:23,63 | 5 | 27583 | 0 |
| nmcmd00c | 06:47:24,19 | 4 | 28521 | 0 |
| nmcmd00c | 06:47:25,28 | 3 | 29278 | 0 |
| nmcmd00c | 06:47:25,60 | 2 | 30216 | 0 |
| nmcmd00c | 06:47:25,95 | 1 | 31154 | 0 |
| nmcmd00c | 06:47:26,24 | 0 | 32092 | 0 |
| nmcmd00c | 06:47:26,66 | 1 | 33031 | 410 |
| nmcmd00c | 06:47:27,40 | 2 | 33788 | 1122 |
| nmcmd00c | 06:47:28,86 | 3 | 34179 | 1611 |
| nmcmd00c | 06:47:30,94 | 4 | 34757 | 2214 |
| scstambc | 06:47:32,16 | 1 | 34938 | 1574 |
| nmcmd00c | 06:47:34,25 | 5 | 35874 | 3146 |
| nmcmd00c | 06:47:37,73 | 6 | 36419 | 3728 |
| nmcmd00c | 06:47:41,81 | 7 | 36651 | 4120 |
| nmcmd00c | 06:47:46,24 | 8 | 36726 | 4416 |
| nmcmd00c | 06:47:50,96 | 9 | 36710 | 4656 |
| nmcmd00c | 06:47:55,89 | 10 | 36699 | 4899 |
| nmcmd00c | 06:48:01,17 | 11 | 36417 | 4977 |
| nmcmd00c | 06:48:06,58 | 12 | 36928 | 5539 |
| nmcmd00c | 06:48:18,43 | 14 | 37458 | 6362 |
| nmcmd00c | 06:48:25,04 | 15 | 37149 | 6424 |
| nmcmd00c | 06:48:31,76 | 16 | 37483 | 6878 |
| nmcmd00c | 06:48:38,93 | 17 | 37424 | 7092 |
| nmcmd00c | 06:48:46,32 | 18 | 37648 | 7478 |
| sacreplc | 06:48:49,62 | 1 | 37089 | 2887 |
| nmcmd00c | 06:48:54,08 | 19 | 38527 | 8265 |
| nmcmd00c | 06:49:02,69 | 20 | 36961 | 7559 |
| nmcmd00c | 06:49:10,64 | 21 | 34836 | 6512 |
| nmcmd00c | 06:49:17,52 | 22 | 34608 | 6623 |
| nmcmd00c | 06:49:24,46 | 23 | 34777 | 6976 |
| nmcmd00c | 06:49:31,84 | 24 | 34585 | 7109 |
| swcmd00c | 06:49:41,20 | 2 | 32653 | 0 |
| swcmd00c | 06:49:41,38 | 3 | 32824 | 784 |
| swcmd00c | 06:49:43,31 | 4 | 34121 | 1826 |
| swcmd00c | 06:49:45,58 | 2 | 21064 | 0 |
| swdisp0c | 06:49:45,86 | 5 | 20783 | 0 |
| swdisp0c | 06:49:45,86 | 3 | 20783 | 0 |
| swdisp0c | 06:49:45,86 | 1 | 20783 | 0 |
| swdisp0c | 06:49:46,15 | 0 | 22207 | 0 |
| swdisp0c | 06:49:46,15 | 0 | 22207 | 0 |
| swdisp0c | 06:49:46,15 | 0 | 22207 | 0 |
| swcmd00c | 06:49:46,84 | 1 | 22326 | 0 |
| swcmd00c | 06:49:47,40 | 0 | 22138 | 0 |
| swcmd00c | 06:49:48,20 | 0 | 22856 | 0 |
| swcmd00c | 06:49:48,40 | 0 | 23039 | 0 |
| swdisp0c | 06:49:48,91 | 0 | 24231 | 0 |
| swdisp0c | 06:49:48,91 | 0 | 24231 | 0 |
| swdisp0c | 06:49:48,91 | 0 | 24231 | 0 |
| swdisp0c | 06:49:49,34 | 0 | 25635 | 0 |
| swdisp0c | 06:49:49,34 | 0 | 25635 | 0 |
| swdisp0c | 06:49:49,34 | 0 | 25635 | 0 |
| swcmd00c | 06:49:50,19 | 0 | 27036 | 0 |
| swcmd00c | 06:49:50,78 | 0 | 27179 | 0 |
| swcmd00c | 06:49:51,41 | 0 | 26535 | 0 |
| swcmd00c | 06:49:52,40 | 0 | 24593 | 0 |
| swcmd00c | 06:49:53,28 | 0 | 22784 | 0 |
| swdisp0c | 06:49:53,66 | 0 | 23336 | 0 |
| swdisp0c | 06:49:53,66 | 0 | 23336 | 0 |
| swdisp0c | 06:49:53,66 | 0 | 23336 | 0 |
| swcmd00c | 06:49:54,28 | 0 | 24528 | 0 |
| swcmd00c | 06:49:54,49 | 0 | 24528 | 0 |
| swdisp0c | 06:49:55,01 | 0 | 25928 | 0 |
| swdisp0c | 06:49:55,01 | 0 | 25928 | 0 |
| swdisp0c | 06:49:55,01 | 0 | 25928 | 0 |
| swdisp0c | 06:49:55,48 | 0 | 27402 | 0 |
| swdisp0c | 06:49:55,48 | 0 | 27402 | 0 |
| swdisp0c | 06:49:55,48 | 0 | 27402 | 0 |
| swcmd00c | 06:49:56,15 | 0 | 28913 | 0 |
| swdisp0c | 06:49:56,54 | 0 | 29830 | 0 |
| swdisp0c | 06:49:56,54 | 0 | 29830 | 0 |
| swdisp0c | 06:49:56,54 | 0 | 29830 | 0 |
| swcmd00c | 06:49:58,22 | 0 | 27299 | 0 |
| swcmd00c | 06:49:59,12 | 0 | 26488 | 0 |
| swcmd00c | 06:49:59,74 | 0 | 26477 | 0 |
| swcmd00c | 06:49:59,92 | 0 | 26831 | 0 |
| swcmd00c | 06:50:00,87 | 0 | 26480 | 0 |
| swcmd00c | 06:50:01,57 | 0 | 26698 | 0 |
| swcmd00c | 06:50:01,81 | 0 | 25065 | 0 |
| swcmd00c | 06:50:02,62 | 0 | 25180 | 0 |
| swcmd00c | 06:50:03,61 | 0 | 26206 | 0 |
| swcmd00c | 06:50:04,59 | 0 | 27188 | 0 |
| swcmd00c | 06:50:05,35 | 0 | 28511 | 0 |
| nmcmd00c | 06:50:06,92 | 21 | 29443 | 0 |
| nmcmd00c | 06:50:08,04 | 19 | 29976 | 0 |
| nmcmd00c | 06:50:09,30 | 15 | 27592 | 0 |
| nmcmd00c | 06:50:10,48 | 11 | 25673 | 0 |
| nmcmd00c | 06:50:11,88 | 8 | 24374 | 0 |
| nmcmd00c | 06:50:13,15 | 5 | 22353 | 0 |
| nmcmd00c | 06:50:14,59 | 3 | 21866 | 0 |
| nmcmd00c | 06:50:16,15 | 2 | 22779 | 0 |
| nmcmd00c | 06:50:17,84 | 1 | 23692 | 0 |
| nmcmd00c | 06:50:19,29 | 0 | 24605 | 0 |
| nmcmd00c | 06:50:19,60 | 0 | 25336 | 0 |
| nmcmd00c | 06:50:19,90 | 0 | 26458 | 0 |
| nmcmd00c | 06:50:20,20 | 0 | 27216 | 0 |
| nmcmd00c | 06:50:20,52 | 0 | 28338 | 0 |
| nmcmd00c | 06:50:20,86 | 0 | 28917 | 0 |
| nmcmd00c | 06:50:21,24 | 0 | 30039 | 0 |

Anhang                                                           2-3

| Process | Time | Count | Size | Delay |
|---|---|---|---|---|
| nmcmd00c | 06:48:12,53 | 13 | 36637 | 5611 |
| nmcmd00c | 06:50:22,06 | 0 | 31919 | 0 |
| nmcmd00c | 06:50:22,44 | 1 | 32859 | 305 |
| nmcmd00c | 06:50:23,24 | 2 | 33617 | 1018 |
| nmcmd00c | 06:50:26,53 | 3 | 33811 | 1386 |
| nmcmd00c | 06:50:29,77 | 2 | 27254 | 0 |
| nmcmd00c | 06:50:31,15 | 1 | 26435 | 0 |
| nmcmd00c | 06:50:32,94 | 0 | 27894 | 0 |
| nmcmd00c | 06:50:34,57 | 0 | 29353 | 0 |
| nmcmd00c | 06:50:35,88 | 0 | 30812 | 0 |
| nmcmd00c | 06:50:37,31 | 0 | 28939 | 0 |
| nmcmd00c | 06:50:38,61 | 0 | 28205 | 0 |
| nmcmd00c | 06:50:40,11 | 0 | 27096 | 0 |
| nmcmd00c | 06:50:41,75 | 0 | 28384 | 0 |
| nmcmd00c | 06:50:42,08 | 0 | 29843 | 0 |
| nmcmd00c | 06:50:42,49 | 0 | 31329 | 0 |
| nmcmd00c | 06:50:42,87 | 0 | 32634 | 0 |
| nmcmd00c | 06:50:43,25 | 1 | 34120 | 1075 |
| nmcmd00c | 06:50:44,65 | 2 | 34693 | 1675 |
| nmcmd00c | 06:50:46,60 | 1 | 26887 | 0 |
| nmcmd00c | 06:50:46,89 | 0 | 27813 | 0 |
| nmcmd00c | 06:50:47,16 | 0 | 29117 | 0 |
| nmcmd00c | 06:50:47,47 | 0 | 30405 | 0 |
| nmcmd00c | 06:50:48,04 | 0 | 31891 | 0 |
| swcmd00c | 06:50:49,55 | 1 | 33125 | 468 |
| swcmd00c | 06:50:50,63 | 2 | 33592 | 1003 |
| swdisp0c | 06:50:51,97 | 1 | 34570 | 1350 |
| swcmd00c | 06:50:52,84 | 3 | 37463 | 3615 |
| swdisp0c | 06:50:53,33 | 2 | 37281 | 3254 |
| swdisp0c | 06:50:56,59 | 3 | 36893 | 3268 |
| swcmd00c | 06:50:56,93 | 4 | 37824 | 4086 |
| swdisp0c | 06:50:59,90 | 4 | 37813 | 4079 |
| swcmd00c | 06:51:02,29 | 5 | 38115 | 4513 |
| swdisp0c | 06:51:03,99 | 5 | 37735 | 4281 |
| swcmd00c | 06:51:07,75 | 6 | 36440 | 3741 |
| swdisp0c | 06:51:08,28 | 6 | 36440 | 3741 |
| swdisp0c | 06:51:12,23 | 7 | 36249 | 3874 |
| swcmd00c | 06:51:12,52 | 7 | 36249 | 3874 |
| swdisp0c | 06:51:16,11 | 8 | 35897 | 3910 |
| swcmd00c | 06:51:17,04 | 8 | 35894 | 3908 |
| swdisp0c | 06:51:20,03 | 9 | 35713 | 4047 |
| swcmd00c | 06:51:21,54 | 9 | 36598 | 4587 |
| swcmd00c | 06:51:26,64 | 10 | 34937 | 3824 |
| swcmd00c | 06:51:31,00 | 7 | 25366 | 0 |
| swcmd00c | 06:51:31,44 | 5 | 26261 | 0 |
| swcmd00c | 06:51:31,87 | 4 | 27153 | 0 |
| swcmd00c | 06:51:32,28 | 3 | 28045 | 0 |
| swcmd00c | 06:51:32,62 | 2 | 28761 | 0 |
| swcmd00c | 06:51:33,01 | 1 | 29834 | 0 |
| swcmd00c | 06:51:33,37 | 0 | 30728 | 0 |
| swcmd00c | 06:51:33,69 | 0 | 31621 | 0 |
| swcmd00c | 06:51:34,04 | 0 | 32338 | 0 |
| swcmd00c | 06:51:34,64 | 0 | 29148 | 0 |
| swcmd00c | 06:51:35,19 | 0 | 27251 | 0 |
| swcmd00c | 06:51:35,68 | 0 | 26479 | 0 |
| swdisp0c | 06:51:36,03 | 7 | 25999 | 0 |
| swdisp0c | 06:51:36,03 | 5 | 25999 | 0 |
| swdisp0c | 06:51:36,04 | 3 | 25999 | 0 |
| swdisp0c | 06:51:36,54 | 2 | 26134 | 0 |
| swdisp0c | 06:51:36,54 | 1 | 26134 | 0 |
| swdisp0c | 06:51:36,54 | 0 | 26134 | 0 |
| swdisp0c | 06:51:36,96 | 0 | 27528 | 0 |
| swdisp0c | 06:51:36,96 | 0 | 27528 | 0 |
| swdisp0c | 06:51:36,97 | 0 | 27528 | 0 |
| swdisp0c | 06:51:37,40 | 0 | 28929 | 0 |
| swdisp0c | 06:51:37,40 | 0 | 28929 | 0 |
| swdisp0c | 06:51:37,40 | 0 | 28929 | 0 |
| swcmd00c | 06:51:38,06 | 0 | 30121 | 0 |
| swcmd00c | 06:51:38,23 | 0 | 30121 | 0 |
| nmcmd00c | 06:51:38,91 | 0 | 32255 | 0 |
| nmcmd00c | 06:51:39,28 | 1 | 33772 | 863 |
| nmcmd00c | 06:51:40,54 | 2 | 35264 | 2023 |
| nmcmd00c | 06:51:42,93 | 3 | 36323 | 2920 |
| nmcmd00c | 06:51:46,14 | 4 | 37631 | 3968 |
| nmcmd00c | 06:51:50,43 | 5 | 37424 | 4092 |
| nmcmd00c | 06:51:54,91 | 6 | 37543 | 4414 |
| nmcmd00c | 06:51:59,65 | 7 | 38866 | 5472 |
| nmcmd00c | 06:52:05,41 | 8 | 39281 | 5975 |
| nmcmd00c | 06:52:11,81 | 9 | 39419 | 6309 |
| nmcmd00e | 06:52:19,09 | 10 | 39605 | 6673 |

| Process | Time | Count | Size | Delay |
|---|---|---|---|---|
| nmcmd00c | 06:50:21,68 | 10 | 30979 | 0 |
| nmcmd00c | 06:52:33,93 | 12 | 39628 | 7187 |
| nmcmd00c | 06:52:41,73 | 13 | 39559 | 7395 |
| nmcmd00c | 06:52:49,63 | 14 | 39495 | 7606 |
| nmcmd00c | 06:52:57,87 | 15 | 39077 | 7601 |
| nmcmd00c | 06:53:05,98 | 16 | 39359 | 8023 |
| nmcmd00c | 06:53:14,59 | 17 | 39114 | 8123 |
| nmcmd00c | 06:53:23,45 | 18 | 39045 | 8331 |
| nmcmd00c | 06:53:32,43 | 19 | 38571 | 8292 |
| nmdisp0c | 06:53:41,19 | 2 | 36382 | 2706 |
| nmcmd00c | 06:53:41,80 | 20 | 37991 | 8188 |
| nmdisp0c | 06:53:43,90 | 3 | 33823 | 1394 |
| nmdisp0c | 06:53:45,30 | 2 | 30004 | 0 |
| nmdisp0c | 06:53:45,31 | 1 | 30004 | 0 |
| nmdisp0c | 06:53:45,31 | 0 | 30004 | 0 |
| nmdisp0c | 06:53:45,31 | 0 | 30004 | 0 |
| nmcmd00c | 06:53:50,23 | 9 | 15478 | 0 |
| scstambc | 06:53:52,39 | 0 | 16511 | 0 |
| scstambc | 06:53:52,71 | 0 | 17444 | 0 |
| scstambc | 06:53:52,90 | 0 | 18424 | 0 |
| scstambc | 06:53:53,38 | 0 | 19011 | 0 |
| scstambc | 06:53:53,81 | 0 | 20012 | 0 |
| scstambc | 06:53:54,44 | 0 | 21180 | 0 |
| scstambc | 06:53:55,01 | 0 | 23038 | 0 |
| scstambc | 06:53:55,37 | 0 | 23965 | 0 |
| scstambc | 06:53:55,81 | 0 | 24852 | 0 |
| scstambc | 06:53:56,60 | 0 | 25630 | 0 |
| scstambc | 06:53:57,18 | 0 | 26692 | 0 |
| scstambc | 06:53:57,94 | 0 | 27677 | 0 |
| scstambc | 06:53:57,99 | 0 | 27677 | 0 |
| scstambc | 06:53:58,05 | 0 | 27677 | 0 |
| scstambc | 06:53:58,11 | 0 | 27677 | 0 |
| scstambc | 06:53:58,11 | 0 | 27677 | 0 |
| scstambc | 06:53:58,26 | 0 | 28194 | 0 |
| scstambc | 06:53:59,21 | 0 | 30414 | 0 |
| scstambc | 06:53:59,43 | 0 | 30687 | 0 |
| scstambc | 06:53:59,66 | 0 | 30999 | 0 |
| scstambc | 06:54:00,05 | 0 | 32101 | 0 |
| scstambc | 06:54:00,26 | 1 | 32917 | 341 |
| scstambc | 06:54:00,65 | 1 | 33129 | 470 |
| scstambc | 06:54:00,80 | 2 | 33129 | 720 |
| scstambc | 06:54:01,28 | 2 | 33916 | 1200 |
| scstambc | 06:54:01,41 | 1 | 33916 | 950 |
| scstambc | 06:54:02,46 | 2 | 35249 | 2014 |
| scstambc | 06:54:02,63 | 3 | 35462 | 2394 |
| scstambc | 06:54:04,58 | 3 | 36552 | 3059 |
| nmcmd00c | 06:54:04,61 | 10 | 35233 | 4004 |
| nmcmd00c | 06:54:10,31 | 6 | 19742 | 0 |
| nmcmd00c | 06:54:12,27 | 3 | 20710 | 0 |
| cdfrop0c | 06:54:13,70 | 0 | 21678 | 0 |
| nmcmd00c | 06:54:13,94 | 2 | 21874 | 0 |
| nmcmd00c | 06:54:15,71 | 1 | 22662 | 0 |
| nmcmd00c | 06:54:17,67 | 0 | 23630 | 0 |
| nmcmd00c | 06:54:19,28 | 0 | 24396 | 0 |
| nmcmd00c | 06:54:21,03 | 0 | 20906 | 0 |
| nmcmd00c | 06:54:22,47 | 0 | 19595 | 0 |
| nmcmd00c | 06:54:23,88 | 0 | 18181 | 0 |
| nmcmd00c | 06:54:24,22 | 0 | 19149 | 0 |
| nmcmd00c | 06:54:24,61 | 0 | 20144 | 0 |
| nmcmd00c | 06:54:25,03 | 0 | 21139 | 0 |
| nmcmd00c | 06:54:25,48 | 0 | 22134 | 0 |
| nmcmd00c | 06:54:26,07 | 0 | 22948 | 0 |
| nmcmd00c | 06:54:26,37 | 0 | 23943 | 0 |
| nmcmd00c | 06:54:26,69 | 0 | 24938 | 0 |
| nmcmd00c | 06:54:27,03 | 0 | 25933 | 0 |
| nmcmd00c | 06:54:27,59 | 0 | 25493 | 0 |
| nmcmd00c | 06:54:28,08 | 0 | 24508 | 0 |
| swcmd00c | 06:54:31,09 | 0 | 21823 | 0 |
| nmcmd00c | 06:54:31,43 | 0 | 22791 | 0 |
| nmcmd00c | 06:54:31,87 | 0 | 23786 | 0 |
| nmcmd00c | 06:54:32,25 | 0 | 24600 | 0 |
| nmcmd00c | 06:54:32,59 | 0 | 25595 | 0 |
| nmcmd00c | 06:54:33,23 | 0 | 26590 | 0 |
| nmcmd00c | 06:54:33,59 | 0 | 27585 | 0 |
| nmcmd00c | 06:54:33,99 | 0 | 28761 | 0 |
| nmcmd00c | 06:54:34,41 | 0 | 29455 | 0 |
| nmcmd00c | 06:54:34,80 | 0 | 30450 | 0 |
| nmcmd00c | 06:54:35,20 | 0 | 31264 | 0 |
| nmcmd00c | 06:54:35,58 | 0 | 32259 | 0 |
| nmcmd00c | 06:54:35,96 | 1 | 33254 | 546 |

| Process | Time | Count | Size | Delay |
|---|---|---|---|---|
| nmcmd00c | 06:52:26,33 | 11 | 39872 | 7086 |
| nmcmd00c | 06:54:38,48 | 3 | 34809 | 1996 |
| nmcmd00c | 06:54:40,73 | 4 | 35623 | 2742 |
| nmcmd00c | 06:54:43,71 | 5 | 36104 | 3286 |
| nmcmd00c | 06:54:47,32 | 6 | 36099 | 3533 |
| nmcmd00c | 06:54:51,19 | 7 | 35774 | 3585 |
| nmcmd00c | 06:54:55,08 | 8 | 35605 | 3731 |
| nmcmd00c | 06:54:59,20 | 6 | 24822 | 0 |
| nmcmd00c | 06:55:01,10 | 4 | 26308 | 0 |
| nmcmd00c | 06:55:01,38 | 3 | 27613 | 0 |
| nmcmd00c | 06:55:01,67 | 2 | 29099 | 0 |
| nmcmd00c | 06:55:02,05 | 1 | 29969 | 0 |
| nmcmd00c | 06:55:02,47 | 0 | 31455 | 0 |
| nmcmd00c | 06:55:02,90 | 1 | 32941 | 355 |
| nmcmd00c | 06:55:03,85 | 2 | 34427 | 1512 |
| nmcmd00c | 06:55:05,71 | 3 | 34918 | 2062 |
| nmcmd00c | 06:55:08,08 | 4 | 36223 | 3109 |
| scstambc | 06:55:11,12 | 0 | 24121 | 0 |
| nmcmd00c | 06:55:11,45 | 3 | 24997 | 0 |
| nmcmd00c | 06:55:11,75 | 2 | 26483 | 0 |
| nmcmd00c | 06:55:12,06 | 1 | 27590 | 0 |
| nmcmd00c | 06:55:12,42 | 0 | 28460 | 0 |
| nmcmd00c | 06:55:12,91 | 0 | 29748 | 0 |
| nmcmd00c | 06:55:13,38 | 0 | 31234 | 0 |
| nmcmd00c | 06:55:13,75 | 0 | 32539 | 0 |
| nmcmd00c | 06:55:14,19 | 1 | 34206 | 1128 |
| nmcmd00c | 06:55:15,65 | 2 | 34895 | 1798 |
| nmcmd00c | 06:55:17,82 | 3 | 36183 | 2834 |
| nmcmd00c | 06:55:20,90 | 4 | 36872 | 3505 |
| swcmd00c | 06:55:26,46 | 1 | 36957 | 2807 |
| swcmd00c | 06:55:29,64 | 0 | 25214 | 0 |
| swcmd00c | 06:55:30,63 | 0 | 24844 | 0 |
| swcmd00c | 06:55:30,96 | 0 | 25540 | 0 |
| swdisp0c | 06:55:31,33 | 0 | 26366 | 0 |
| swdisp0c | 06:55:31,33 | 0 | 26366 | 0 |
| swdisp0c | 06:55:31,33 | 0 | 26366 | 0 |
| swdisp0c | 06:55:31,80 | 0 | 27790 | 0 |
| swdisp0c | 06:55:31,80 | 0 | 27790 | 0 |
| swdisp0c | 06:55:31,81 | 0 | 27790 | 0 |
| swcmd00c | 06:55:32,57 | 0 | 29774 | 0 |
| swcmd00c | 06:55:33,21 | 0 | 31072 | 0 |
| swcmd00c | 06:55:33,92 | 0 | 31790 | 0 |
| swcmd00c | 06:55:34,00 | 0 | 31790 | 0 |
| swdisp0c | 06:55:34,38 | 1 | 33165 | 492 |
| swdisp0c | 06:55:34,88 | 2 | 34254 | 1407 |
| swcmd00c | 06:55:35,19 | 1 | 35145 | 1701 |
| swdisp0c | 06:55:36,30 | 1 | 26240 | 0 |
| swdisp0c | 06:55:36,31 | 0 | 26240 | 0 |
| swdisp0c | 06:55:36,31 | 0 | 26240 | 0 |
| swdisp0c | 06:55:36,31 | 0 | 26240 | 0 |
| swcmd00c | 06:55:37,55 | 0 | 24219 | 0 |
| swcmd00c | 06:55:38,24 | 0 | 25259 | 0 |
| swcmd00c | 06:55:39,18 | 0 | 26260 | 0 |
| swcmd00c | 06:55:40,04 | 0 | 27242 | 0 |
| swdisp0c | 06:55:40,64 | 0 | 28173 | 0 |
| swdisp0c | 06:55:40,64 | 0 | 28173 | 0 |
| swdisp0c | 06:55:40,64 | 0 | 28173 | 0 |
| swcmd00c | 06:55:41,24 | 0 | 29365 | 0 |
| swcmd00c | 06:55:41,39 | 0 | 29719 | 0 |
| swdisp0c | 06:55:41,70 | 0 | 30765 | 0 |
| swdisp0c | 06:55:41,70 | 0 | 30765 | 0 |
| swdisp0c | 06:55:41,70 | 0 | 30765 | 0 |
| swdisp0c | 06:55:42,08 | 0 | 32239 | 0 |
| swdisp0c | 06:55:42,08 | 0 | 32239 | 0 |
| swdisp0c | 06:55:42,08 | 0 | 32239 | 0 |
| swcmd00c | 06:55:42,59 | 1 | 33569 | 739 |
| swdisp0c | 06:55:43,67 | 0 | 28344 | 0 |
| swdisp0c | 06:55:43,67 | 0 | 28344 | 0 |
| swdisp0c | 06:55:43,67 | 0 | 28344 | 0 |
| swcmd00c | 06:55:44,69 | 0 | 26598 | 0 |
| swcmd00c | 06:55:45,53 | 0 | 26317 | 0 |
| swcmd00c | 06:55:46,18 | 0 | 27022 | 0 |
| swcmd00c | 06:55:46,36 | 0 | 27376 | 0 |
| nmcmd00c | 06:55:48,55 | 3 | 29198 | 0 |
| nmcmd00c | 06:55:49,85 | 2 | 30914 | 0 |
| nmcmd00c | 06:55:51,22 | 1 | 32085 | 0 |
| nmcmd00c | 06:55:53,08 | 2 | 33801 | 1130 |
| nmcmd00c | 06:55:56,02 | 3 | 35339 | 2319 |
| nmcmd00c | 06:56:00,27 | 4 | 35459 | 2642 |
| nmcmd00c | 06:56:04,34 | 5 | 36521 | 3540 |

| Process | Time | Count | Size | Delay |
|---|---|---|---|---|
| nmcmd00c | 06:54:36,81 | 2 | 34249 | 1404 |
| nmcmd00c | 06:56:09,17 | 6 | 36433 | 3737 |
| nmcmd00c | 06:56:14,61 | 7 | 36851 | 4242 |
| nmcmd00c | 06:56:20,33 | 8 | 37486 | 4879 |
| nmcmd00c | 06:56:25,76 | 9 | 38708 | 5875 |
| nmcmd00c | 06:56:32,15 | 10 | 37750 | 5541 |
| nmcmd00c | 06:56:38,35 | 11 | 38453 | 6220 |
| nmcmd00c | 06:56:45,07 | 12 | 38734 | 6641 |
| nmcmd00c | 06:56:52,19 | 13 | 37810 | 6327 |
| nmcmd00c | 06:56:59,44 | 14 | 38241 | 6840 |
| nmcmd00c | 06:57:06,91 | 15 | 38271 | 7109 |
| nmcmd00c | 06:57:14,51 | 16 | 38525 | 7514 |
| nmcmd00c | 06:57:22,63 | 17 | 36907 | 6776 |
| nmcmd00c | 06:57:30,06 | 18 | 35521 | 6180 |
| nmdisp0c | 06:57:36,80 | 1 | 35789 | 2094 |
| nmdisp0c | 06:57:38,91 | 2 | 36586 | 2830 |
| nmcmd00c | 06:57:40,45 | 19 | 38251 | 8096 |
| nmdisp0c | 06:57:41,75 | 3 | 36932 | 3291 |
| nmdisp0c | 06:57:45,08 | 4 | 35546 | 2695 |
| nmdisp0c | 06:57:47,79 | 5 | 35149 | 2703 |
| nmcmd00c | 06:57:49,87 | 20 | 36776 | 7446 |
| nmdisp0c | 06:57:50,50 | 6 | 35457 | 3141 |
| nmcmd00c | 06:57:58,63 | 19 | 31921 | 0 |
| nmcmd00c | 06:58:00,71 | 20 | 33383 | 5375 |
| nmcmd00c | 06:58:07,30 | 21 | 33309 | 5580 |
| nmcmd00c | 06:58:14,68 | 22 | 32875 | 5565 |
| nmcmd00c | 06:58:21,70 | 20 | 31085 | 0 |
| nmcmd00c | 06:58:23,93 | 19 | 32547 | 0 |
| nmcmd00c | 06:58:25,80 | 20 | 34009 | 5757 |
| nmcmd00c | 06:58:33,24 | 19 | 32035 | 0 |
| nmcmd00c | 06:58:33,50 | 20 | 33316 | 5334 |
| nmcmd00c | 06:58:39,15 | 21 | 32865 | 5309 |
| nmcmd00c | 06:58:44,80 | 19 | 31134 | 0 |
| nmcmd00c | 06:58:45,18 | 18 | 32623 | 0 |
| nmcmd00c | 06:58:45,53 | 19 | 34293 | 5681 |
| nmcmd00c | 06:58:51,58 | 9 | 16217 | 0 |
| nmcmd00c | 06:58:51,96 | 4 | 17706 | 0 |
| nmcmd00c | 06:58:52,31 | 2 | 19195 | 0 |
| nmcmd00c | 06:58:52,85 | 1 | 20684 | 0 |
| nmcmd00c | 06:58:53,21 | 0 | 22173 | 0 |
| sacrep1c | 06:58:54,22 | 0 | 22552 | 0 |
| swcmd00c | 06:58:55,33 | 0 | 19254 | 0 |
| swcmd00c | 06:58:55,90 | 0 | 18845 | 0 |
| swcmd00c | 06:58:56,03 | 0 | 18835 | 0 |
| swcmd00c | 06:58:56,80 | 0 | 18615 | 0 |
| swcmd00c | 06:58:57,54 | 0 | 16861 | 0 |
| swcmd00c | 06:58:58,40 | 0 | 16156 | 0 |
| swcmd00c | 06:58:58,96 | 0 | 15990 | 0 |
| swcmd00c | 06:59:00,11 | 0 | 15925 | 0 |
| swcmd00c | 06:59:00,74 | 0 | 16952 | 0 |
| swdisp0c | 06:59:01,27 | 0 | 17930 | 0 |
| swdisp0c | 06:59:01,28 | 0 | 17930 | 0 |
| swdisp0c | 06:59:01,28 | 0 | 17930 | 0 |
| swdisp0c | 06:59:01,72 | 0 | 19377 | 0 |
| swdisp0c | 06:59:01,72 | 0 | 19377 | 0 |
| swdisp0c | 06:59:01,72 | 0 | 19377 | 0 |
| swdisp0c | 06:59:02,22 | 0 | 20903 | 0 |
| swdisp0c | 06:59:02,22 | 0 | 20903 | 0 |
| swdisp0c | 06:59:02,22 | 0 | 20903 | 0 |
| swcmd00c | 06:59:03,00 | 0 | 22556 | 0 |
| swcmd00c | 06:59:03,47 | 0 | 23533 | 0 |
| swcmd00c | 06:59:05,46 | 0 | 21615 | 0 |
| swcmd00c | 06:59:06,37 | 0 | 19619 | 0 |
| swcmd00c | 06:59:07,26 | 0 | 18689 | 0 |
| swcmd00c | 06:59:08,19 | 0 | 17670 | 0 |
| swcmd00c | 06:59:08,75 | 0 | 18213 | 0 |
| swcmd00c | 06:59:09,31 | 0 | 17544 | 0 |
| swcmd00c | 06:59:09,85 | 0 | 17373 | 0 |
| swcmd00c | 06:59:10,31 | 0 | 17325 | 0 |
| swcmd00c | 06:59:10,85 | 0 | 18217 | 0 |
| swcmd00c | 06:59:11,40 | 0 | 19109 | 0 |
| swcmd00c | 06:59:11,92 | 0 | 20003 | 0 |

**Patentansprüche**

1. Computersystem zur parallelen Ausführung von mehreren Prozessen, mit einer knappen Ressource R, auf welche die auszuführenden Prozesse zugreifen, aufweisend

   eine erste Einrichtung (1) zur Berechnung einer Kapazitätsauslastung C der Ressource R,
   eine zweite Einrichtung (2) zur Bestimmung einer Last-Verantwortlichkeit LR eines auf die Ressource R zugreifenden Prozesses,
   eine dritte Einrichtung (3) zur Verzögerung eines auf die Ressource R zugreifenden Prozesses in Abhängigkeit von der Kapazitätsauslastung C, einer kritischen Kapazitätsauslastung $C_{crit}$ der Ressource R und der Last-Verantwortlichkeit LR des Prozesses.

2. Computersystem nach Anspruch 1,
   **dadurch gekennzeichnet,**
   **daß** die zweite Einrichtung (2) die Last-Verantwortlichkeit LR in Abhängigkeit von der Zahl der durchgeführten Zugriffe eines Prozesses auf die Ressource R berechnet.

3. Computersystem nach einem der Ansprüche 1 oder 2,
   **dadurch gekennzeichnet,**
   **daß** die zweite Einrichtung (2) die Last-Abhängigkeit LR eines Prozesses in Abhängigkeit von der durch den Prozess beanspruchten Kapazität der Ressource R bestimmt.

4. Computersystem nach einem der Ansprüche 1 bis 3,
   **dadurch gekennzeichnet,**
   **daß** die zweite Einrichtung (2) die Last-Abhängigkeit LR eines Prozesses bei einer Kapazitätsauslastung C größer als die kritische Kapazitätsauslastung $C_{crit}$ erhöht und bei einer Kapazitätsauslastung C kleiner als die kritische Kapazitätsauslastung $C_{crit}$ absenkt.

5. Computersystem nach einem der Ansprüche 1 bis 4,
   **dadurch gekennzeichnet,**
   **daß** die kritische Kapazitätsauslastung $C_{crit}$ im Bereich zwischen 20% und 80% einer maximalen Kapazität $C_{max}$ der Ressource R gewählt ist.

6. Computersystem nach Anspruch 5,
   **dadurch gekennzeichnet,**
   **daß** die kritische Kapazitätsauslastung $C_{crit}$ zu 50 % der maximalen Kapazitätsauslastung $C_{max}$ der Ressource R gewählt ist.

7. Computersystem nach einem der Ansprüche 1 bis 6,
   **dadurch gekennzeichnet,**
   **daß** die dritte Einrichtung (3) einen Prozess nicht verzögert, dessen Last-Verantwortlichkeit LR unterhalb eines festgelegten Wertes liegt.

8. Computersystem nach einem der Ansprüche 1 bis 7,
   **dadurch gekennzeichnet,**
   **daß** die dritte Einrichtung (3) Prozesse nicht verzögert, wenn die aktuelle Kapazitätsauslastung C kleiner ist als die kritische Kapazitätsauslastung $C_{crit}$.

9. Computersystem nach einem der Ansprüche 1 bis 8
   **dadurch gekennzeichnet,**
   **daß** die dritte Einrichtung (3) einem Prozess eine Verzögerung auferlegt, die nach der folgenden Formel berechnet wird:

$$D = \min\left( D_{max,}\, K \times LR + D_{min} + \frac{(C - C_{crit}) \times (D_{max} - D_{min})}{C_{max} - C_{crit}} \right)$$

wobei $D_{max}$ eine maximale und $D_{min}$ eine minimale Verzögerung und K ein wählbarer konstanter Faktor ist.

**10.** Computersystem nach Anspruch 9,
**dadurch gekennzeichnet, daß**
die maximale Verzögerung $D_{max}$=15s, die minimale Verzögerung $D_{min}$=0,5s und die Konstante K=0,1s ist.

**11.** Verfahren zur Steuerung von Prozessen auf einem Computersystem zur parallelen Ausführung von mehreren Prozessen, mit einer knappen Ressource R, auf welche die Prozesse zugreifen,
aufweisend:

- Berechnung einer Kapazitätsauslastung C der Ressource R,
- Bestimmung einer Last-Verantwortlichkeit LR eines auf die Ressource R zugreifenden Prozesses,
- Verzögerung der Ausführung des auf die Ressource R zugreifenden Prozesses in Abhängigkeit von der Kapazitätsauslastung C, der kritischen Kapazitätsauslastung $C_{crit}$ der Ressource R und der Last-Verantwortlichkeit LR des Prozesses.

**12.** Verfahren nach Anspruch 11,
**dadurch gekennzeichnet,**
**daß** die Last-Verantwortlichkeit LR eines Prozesses in Abhängigkeit von der Anzahl der Zugriffe bestimmt wird.

**13.** Verfahren nach Anspruch 11,
**dadurch gekennzeichnet,**
**daß** die Last-Verantwortlichkeit LR eines Prozesses in Abhängigkeit von der für die Ausführung des Prozesses erforderlichen Kapazität der Ressource R bestimmt wird.

**14.** Verfahren nach einem der Ansprüche 11 bis 13,
**dadurch gekennzeichnet,**
**daß** die die Last-Abhängigkeit LR eines Prozesses bei einer Kapazitätsauslastung C größer als die kritische Kapazitätsauslastung $C_{crit}$ erhöht und bei einer Kapazitätsauslastung C kleiner als die kritische Kapazitätsauslastung $C_{crit}$ abgesenkt wird.

**15.** Verfahren nach einem der Ansprüche 11 bis 14,
**dadurch gekennzeichnet,**
**daß** die kritische Kapazitätsauslastung $C_{crit}$ zu 20% bis 80% der maximalen Kapazitätsauslastung $C_{max}$ der Ressource R gewählt wird.

**16.** Verfahren nach Anspruch 15,
**dadurch gekennzeichnet,**
**daß** die kritische Kapazitätsauslastung $C_{crit}$ zu 50% der maximalen Kapazitätsauslastung $C_{max}$ der Ressource R gewählt wird.

**17.** Verfahren nach einem der Ansprüche 11 bis 16
**dadurch gekennzeichnet,**
**daß** ein Prozess nicht verzögert wird, dessen Last-Verantwortlichkeit LR kleiner als ein festgelegter Wert ist.

**18.** Verfahren nach einem der Ansprüche 11 bis 17
**dadurch gekennzeichnet,**
**daß** Prozesse nicht verzögert werden, wenn die Kapazitätsauslastung C der Ressource R kleiner ist als die kritische Kapazitätsauslastung $C_{crit}$.

**19.** Verfahren nach einem der Ansprüche 11 bis 18,

**dadurch gekennzeichnet,**
**daß** die Verzögerung gemäß der folgenden Formel berechnet wird:

$$D = \min\left( D_{max}, K \times LR + D_{min} + \frac{(C - C_{crit}) \times (D_{max} - D_{min})}{C_{max} - C_{crit}} \right)$$

wobei $D_{max}$ eine maximale, $D_{min}$ eine minimale Verzögerung und K ein wählbarer konstanter Faktor ist.

20. Verfahren nach Anspruch 19,
**dadurch gekennzeichnet,**
**daß** die maximale Verzögerung $D_{max}$=15s, die minimale Verzögerung $D_{min}$=0,5s und die Konstante K=0,1s ist.

**Claims**

1. Computer system for parallel execution of a plurality of processes, having a scarce resource R which the processes to be executed can access, having

   a first device (1) for calculating a capacity utilization level C for the resource R,
   a second device (2) for determining a load responsibility LR for a process accessing the resource R,
   a third device (3) for delaying a process, which accesses the resource R, on the basis of the capacity utilization level C, a critical capacity utilization level $C_{crit}$ for the resource R and the load responsibility LR of the process.

2. Computer system according to Claim 1,
   **characterized**
   **in that** the second device (2) calculates the load responsibility LR on the basis of the number of access operations carried out on the resource R by a process.

3. Computer system according to one of Claims 1 or 2,
   **characterized**
   **in that** the second device (2) determines the load dependency LR of a process on the basis of the resource R capacity used by the process.

4. Computer system according to one of Claims 1 or 3,
   **characterized**
   **in that** the second device (2) increases the load dependency LR of a process for a capacity utilization level C greater than the critical capacity utilization level $C_{crit}$, and reduces it for a capacity utilization level C less than the critical capacity utilization level $C_{crit}$.

5. Computer system according to one of Claims 1 to 4,
   **characterized**
   **in that** the critical capacity utilization level $C_{crit}$ is chosen in the region between 20% and 80% of a maximum capacity $C_{max}$ for the resource R.

6. Computer system according to Claim 5,
   **characterized**
   **in that** the critical capacity utilization level $C_{crit}$ is chosen at 50% of the maximum capacity utilization level $C_{max}$ of the resource R.

7. Computer system according to one of Claims 1 to 6,
   **characterized**
   **in that** the third device (3) does not delay a process whose load responsibility LR lies below a stipulated value.

**8.** Computer system according to one of Claims 1 to 7,
**characterized**
**in that** the third device (3) does not delay processes if the current capacity utilization level C is less than the critical capacity utilization level $C_{crit}$.

**9.** Computer system according to one of Claims 1 to 8,
**characterized**
**in that** the third device (3) subjects a process to a delay which is calculated on the basis of the following formula:

$$D = \min\left( D_{max,}\ KxLR + D_{min} + \frac{(C - C_{crit})x(D_{max} - D_{min})}{C_{max} - C_{crit}} \right)$$

where $D_{max}$ is a maximum delay and $D_{min}$ is a minimum delay and K is a selectable constant factor.

**10.** Computer system according to Claim 9,
**characterized in that**
the maximum delay is $D_{max}$=15s, the minimum delay is $D_{min}$=0.5s and the constant is K=0.1s.

**11.** Method for controlling the processes on a computer system for parallel execution of a plurality of processes, having a scarce resource R which the processes access,
comprising:

- calculation of a capacity utilization level C for the resource R,
- determination of a load responsibility LR for a process accessing the resource R,
- delay of the execution of the process accessing the resource R on the basis of the capacity utilization level C, the critical capacity utilization level $C_{crit}$ of the resource R and the load responsibility LR of the process.

**12.** Method according to Claim 11,
**characterized**
**in that** the load responsibility LR of a process is determined on the basis of the number of access operations

**13.** Method according to Claim 11,
**characterized**
**in that** the load responsibility LR of a process is determined on the basis of the resource R capacity required for executing the process.

**14.** Method according to one of Claims 11 to 13,
**characterized**
**in that** the load dependency LR of a process is increased for a capacity utilization level C greater than the critical capacity utilization level $C_{crit}$, and is reduced for a capacity utilization level C less than the critical capacity utilization level $C_{crit}$.

**15.** Method according to one of Claims 11 to 14,
**characterized**
**in that** the critical capacity utilization level $C_{crit}$ is chosen at 20% to 80% of the maximum capacity utilization level $C_{max}$ of the resource R.

**16.** Method according to one of Claims 15,
**characterized**
**in that** the critical capacity utilization level $C_{crit}$ is chosen at 50% of the maximum capacity utilization level $C_{max}$ of the resource R.

**17.** Method according to one of Claims 11 to 16,
**characterized**
**in that** a process whose load responsibility LR is less than a stipulated value is not delayed.

**18.** Method according to one of Claims 11 to 17,
**characterized**
**in that** processes are not delayed if the capacity utilization level C of the resource R is less than the critical capacity utilization level $C_{crit}$.

**19.** Method according to one of Claims 11 to 18,
**characterized**
**in that** the delay is calculated on the basis of the following formula:

$$D = min\left( D_{max,} \ KxLR + D_{min} + \frac{(C - C_{crit})x(D_{max} - D_{min})}{C_{max} - C_{crit}} \right)$$

where $D_{max}$ is a maximum delay, $D_{min}$ is a minimum delay and K is a selectable constant factor.

**20.** Method according to Claim 19,
**characterized**
**in that** the maximum delay is $D_{max}$=15s, the minimum delay is $D_{min}$=0.5s and the constant is K=0.1s.


**Revendications**

**1.** Système informatique pour l'exécution en parallèle de plusieurs processus, avec une ressource à peine suffisante R à laquelle les processus à exécuter accèdent, comportant

un premier dispositif (1) pour le calcul d'une utilisation de capacité C de la ressource R,
un deuxième dispositif (2) pour la détermination d'une part de charge LR d'un processus accédant à la ressource R,
un troisième dispositif (3) pour le retardement d'un processus accédant à la ressource R en fonction de l'utilisation de capacité C, d'une utilisation de capacité critique $C_{crit}$ de la ressource R et de la part de charge LR du processus.

**2.** Système informatique selon la revendication 1,
**caractérisé par** le fait que le deuxième dispositif (2) calcule la part de charge LR en fonction du nombre des accès effectués par un processus à la ressource R.

**3.** Système informatique selon l'une des revendications 1 ou 2,
**caractérisé par le fait que** le deuxième dispositif (2) détermine la part de charge LR d'un processus en fonction de la capacité, sollicitée par le processus, de la ressource R.

**4.** Système informatique selon l'une des revendications 1 à 3,
**caractérisé par le fait que** le deuxième dispositif (2) augmente la part de charge LR d'un processus pour une utilisation de capacité C plus grande que l'utilisation de capacité critique $C_{crit}$ et la diminue pour une utilisation de capacité C plus petite que l'utilisation de capacité critique $C_{crit}$.

**5.** Système informatique selon l'une des revendications 1 à 4,
**caractérisé par le fait que** l'utilisation de capacité critique $C_{crit}$ est choisie dans la plage entre 20 % et 80 % d'une capacité maximale $C_{max}$ de la ressource R.

**6.** Système informatique selon la revendication 5,
**caractérisé par le fait que** l'utilisation de capacité critique $C_{crit}$ est choisie à 50 % de l'utilisation de capacité maximale $C_{max}$ de la ressource R.

**7.** Système informatique selon l'une des revendications 1 à 6,
**caractérisé par le fait que** le troisième dispositif (3) ne retarde pas un processus dont la part de charge LR

**12**

est en dessous d'une valeur fixée.

**8.** Système informatique selon l'une des revendications 1 à 7,
**caractérisé par le fait que** le troisième dispositif (3) ne retarde pas de processus lorsque l'utilisation de capacité actuelle C est plus petite que l'utilisation de capacité critique C$_{crit}$.

**9.** Système informatique selon l'une des revendications 1 à 3,
**caractérisé par le fait que** le troisième dispositif (3) impose à un processus un retard qui est calculé selon la formule suivante :

$$D = \min\left(D_{max}, K \times LR + D_{min} + \frac{(C - C_{crit}) \times (D_{max} - D_{min})}{C_{max} - C_{crit}}\right)$$

D$_{max}$ étant un retard maximal, D$_{min}$ un retard minimal et K un facteur constant pouvant être choisi.

**10.** Système informatique selon la revendication 9,
**caractérisé par le fait que** le retard maximal est D$_{max}$ = 15 s, le retard minimal D$_{min}$ = 0,5 s et la constante K = 0,1 s.

**11.** Procédé pour la commande de processus dans un système informatique destiné à l'exécution en parallèle de plusieurs processus, avec une ressource à peine suffisante R à laquelle les processus accèdent, comportant :

- le calcul d'une utilisation de capacité C de la ressource R,
- la détermination d'une part de charge LR d'un processus accédant à la ressource R,
- le retardement de l'exécution du processus accédant à la ressource R en fonction de l'utilisation de capacité C, de l'utilisation de capacité critique C$_{crit}$ de la ressource R et de la part de charge LR du processus.

**12.** Procédé selon la revendication 11,
**caractérisé par le fait qu'**on détermine la part de charge LR d'un processus en fonction du nombre des accès.

**13.** Procédé selon la revendication 11,
**caractérisé par le fait qu'**on détermine la part de charge LR d'un processus en fonction de la capacité, nécessaire à l'exécution du processus, de la ressource R.

**14.** Procédé selon l'une des revendications 11 à 13,
**caractérisé par le fait qu'**on augmente la part de charge LR d'un processus pour une utilisation de capacité C plus grande que l'utilisation de capacité critique C$_{crit}$ et qu'on la diminue pour une utilisation de capacité C plus petite que l'utilisation de capacité critique C$_{crit}$.

**15.** Procédé selon l'une des revendications 11 à 14,
**caractérisé par le fait qu'**on choisit l'utilisation de capacité critique C$_{crit}$ dans la plage entre 20 % et 80 % de la capacité maximale C$_{max}$ de la ressource R.

**16.** Procédé selon la revendication 15,
**caractérisé par le fait qu'**on choisit l'utilisation de capacité critique C$_{crit}$ à 50 % de l'utilisation de capacité maximale C$_{max}$ de la ressource R.

**17.** Procédé selon l'une des revendications 11 à 16,
**caractérisé par le fait qu'**on ne retarde pas un processus dont la part de charge LR est plus petite qu'une valeur fixée.

**18.** Procédé selon l'une des revendications 11 à 17,
**caractérisé par le fait qu'**on ne retarde pas de processus lorsque l'utilisation de capacité actuelle C de la ressource R est plus petite que l'utilisation de capacité critique $C_{crit}$.

**19.** Procédé selon l'une des revendications 11 à 18,
**caractérisé par le fait qu'**on calcule le retard selon la formule suivante :

$$D = \min\left(D_{max}, K \times LR + D_{min} + \frac{(C - C_{crit}) \times (D_{max} - D_{min})}{C_{max} - C_{crit}}\right)$$

$D_{max}$ étant un retard maximal, $D_{min}$ un retard minimal et K un facteur constant pouvant être choisi.

**20.** Procédé selon la revendication 19,
**caractérisé par le fait que** le retard maximal est $D_{max} = 15$ s, le retard minimal $D_{min} = 0{,}5$ s et la constante K = 0,1 s.

FIG 1

FIG 2